# EUROPÄISCHE PATENTANMELDUNG

(11) **EP 3 138 660 A1**
(43) Veröffentlichungstag der Anmeldung: **08.03.2017**
(21) Anmeldenummer: 16175395.9
(22) Anmeldetag: 21.06.2016
(51) Int. Cl.: B23Q 3/10, B25B 1/24, B23Q 11/12, B29C 67/00

(54) **SPANNBACKE UND VERFAHREN ZUR HERSTELLUNG EINER SPANNBACKE**

(30) Priorität: 03.09.2015 DE 102015114710
(71) Anmelder: Röhm GmbH, 89567 Sontheim (DE)
(72) Erfinder: Schweigert, Eduard, 89428 Syrgenstein (DE); Gräßle, Jens, 89522 Heidenheim (DE)
(74) Vertreter: Hentrich Patentanwälte PartG mbB

(57) **Zusammenfassung**

Die Erfindung betrifft eine Spannbacke zum Spannen oder Halten eines Werkstückes, mit einem Grundkörper (2) und mit einer Spannkontur (3), die zur Anlage an ein Werkstück vorgesehen ist und durch eine Kühlvorrichtung kühlbar ist. Die Kühlvorrichtung ist durch mindestens einen zur Aufnahme eines Kühlmittels vorgesehenen Kühlmittelkanal (4) realisiert, der durch ein generatives Herstellungsverfahren im Grundkörper (2) derart ausgebildet ist, dass der Grundköper (2) frei von Hilfsbohrungen ist. Weiterhin betrifft die Erfindung ein Verfahren zur Herstellung einer Spannbacke.

## Beschreibung

Die Erfindung betrifft eine Spannbacke zum Spannen oder Halten eines Werkstückes, mit einem Grundkörper und mit einer Spannkontur, die zur Anlage an ein Werkstück vorgesehen ist und durch eine Kühlvorrichtung kühlbar ist. Weiterhin betrifft die Erfindung ein Verfahren zur Herstellung einer erfindungsgemäßen Spannbacke.

Aus dem Stand der Technik sind bereits vielfältige Spannbacken bekannt, die je nach Anwendungszweck unterschiedlich gestaltet sind. Vom Begriff Spannbacken sind dabei auch andere Haltemittel wie beispielsweise Greifer oder Haltebacken umfasst. Bei der Verwendung dieser Spannbacken, beispielsweise beim Hartdrehen, Zerspanen oder Laserbearbeiten von Werkstücken besteht jedoch häufig das Problem, dass die bei der Bearbeitung dieser Werkstücke entstehende Wärme über die Spannbacken in das Spannmittel und letztlich in die damit verbundene Maschineneinheit geleitet wird, wodurch sich diese stark erhitzen können, was zu einer Beeinträchtigung ihrer Funktionalität führen kann. Weiterhin führt die Erwärmung auch zu einer Ausdehnung des zu bearbeitenden Werkstücks und der Spannbacke, was zu einer Vergrößerung der Fertigungstoleranzen führt und damit das Arbeitsergebnis negativ beeinflusst.

Spannbacken der eingangs genannten Art sind beispielsweise bereits aus der DE 36 26 974 A1 bekannt, bei der die gezeigten Spannbacken zum Laserschweißen verwendet werden. Um ein Verwerfen des zu bearbeitenden Materials beim Schweißen zu unterbinden, ist den Spannbacken jeweils eine Kühlvorrichtung in Form wassergekühlter Spannschienen zugeordnet. Diese Spannschienen, in denen Kühlkanäle geführt sind, sind jedoch nicht integral mit dem Grundkörper gebildet und müssen zunächst aufwändig mit diesem verbunden werden.

Aus der DE 601 27 610 T2 ist eine Spannbacke in Form eines Greifers bekannt, der eine als Kühlkreislauf gebildete Kühlvorrichtung aufweist. Der Kühlkreislauf weist dabei eine Reihe senkrecht zueinander orientierter Kühlkanalabschnitte auf. Die Bildung dieser Abschnitte erfolgt üblicherweise durch senkrecht zueinander orientierte Hilfsbohrungen, die in den Greifer eingebracht werden. Die Kanäle dieser Hilfsbohrungen schneiden sich, wodurch letztlich ein Kühlmittelkanal gebildet wird. Um ein Austreten des Kühlmittels aus den Hilfsbohrungen zu verhindern, müssen diese dann aufwändig wieder verschlossen werden. Weiterhin führt die Verwendung von Hilfsbohrungen zu einer lokalen Schwächung des Greifers, wodurch die mechanische Stabilität des Grundkörpers der Spannbacke beeinträchtigt wird.

Die der Spannbacke zugrundeliegende Aufgabe besteht somit darin, die oben genannten Nachteile zu reduzieren.

Diese Aufgabe wird gemäß der Erfindung bei einer Spannbacke der eingangs genannten Art dadurch gelöst, dass die Kühlvorrichtung durch mindestens einen zur Aufnahme eines Kühlmittels vorgesehenen Kühlmittelkanal realisiert ist, der durch ein generatives Herstellungsverfahren im Grundkörper derart ausgebildet ist, dass der Grundköper frei von Hilfsbohrungen ist.

Hierdurch ist gewährleistet, dass die bei der Bearbeitung eines Werkstücks entstehende Wärme durch das in dem Kühlmittelkanal befindliche Kühlmittel effektiv abgeführt wird, was zu einer Verbesserung des Arbeitsergebnisses führt. Da der Grundkörper durch ein generatives Herstellungsverfahren gefertigt wird, ist es möglich, den Kühlmittelkanal unmittelbar bei der Fertigung des Grundkörpers auszubilden. Hierzu wird der Bereich, in dem in der fertigen Spannbacke der Kühlmittelkanal verlaufen soll, bei der generativen Fertigung des Grundkörpers ausgespart. Zudem lassen sich damit beliebige Verläufe des Kühlmittelkanals realisieren und es ist möglich, auf Hilfsbohrung in dem Grundkörper zu verzichten, die die mechanische Belastbarkeit der Spannbacke negativ beeinflussen und den Herstellungsprozess erschweren, da die Hilfsbohrungen aufwändig wieder geschlossen werden müssen. Insbesondere lassen sich dadurch auch relativ kleine Spannbacken realisieren, bei denen aus Stabilitäts- und Platzgründen eine Integration einer Kühlvorrichtung in die Spannbacke selbst nicht möglich wäre.

Als besonders vorteilhaft hat es sich auch erwiesen, wenn der Kühlmittelkanal mindestens einen Bogenabschnitt aufweist. Durch die Verwendung eines Bogenabschnittes wird das Strömungsverhalten des Kühlmittels deutlich verbessert, wodurch sich letztlich der Wärmeabtransport verbessern lässt.

Um die Kühlleistung zu erhöhen, hat es sich weiterhin auch bewährt, wenn der Kühlmittelkanal einen mäanderförmigen Teilabschnitt beinhaltet. Somit kann sich der Kühlmittelkanal über die gesamte Breite und Höhe des Grundkörpers erstrecken, wodurch sich eine möglichst große Kühlfläche realisieren lässt, was ebenfalls den Abtransport der Wärme begünstigt.

Als günstig hat es sich auch gezeigt, wenn der Verlauf des Kühlmittelkanals an die Spannkontur angepasst ist. Bei der erfindungsgemäßen Spannbacke ist es möglich, den Verlauf des Kühlmittelkanals beliebig zu gestalten, so dass dieser dem Verlauf der Spannkontur folgen kann, die beispielsweise durch eine gekrümmte Fläche gebildet ist und nicht notwendigerweise plan sein muss.

Als besonders vorteilhaft hat es sich auch erwiesen, wenn die Wandstärke zwischen der Spannkontur und dem Kühlmittelkanal kleiner ist als der Durchmesser des Kühlmittelkanals. Hierdurch wird ein konturnahes Kühlen der Spannbacke ermöglicht, wodurch auf einfache Art und Weise gewährleistet ist, dass die auftretende Wärme effektiv abgeleitet wird. Im Rahmen der Erfindung ist es diesbezüglich auch bevorzugt, wenn der Durchmesser des Kühlmittelkanals konstant ist

Als günstig hat es sich auch gezeigt, wenn in dem Grundkörper ein Kühlmitteleinlass und ein Kühlmittelauslass ausgebildet sind. Hierdurch kann das Kühlmittel auf besonders einfache Art und Weise in die Spannbacke ein- bzw. ausgeleitet werden, um die Kühlleistung konstant zu halten. Im Rahmen der Erfindung ist es hierbei insbesondere auch vorgesehen, dass der Kühlmitteleinlass und der Kühlmittelauslass bei der generativen Fertigung bereits mit in dem Grundkörper ausgebildet werden. An den Kühlmitteleinlass und den Kühlmittelauslass können dann auf einfache Art und Weise Kühlmittelleitungen angeschlossen werden, beispielsweise durch eine geeignete Steck- oder Schraubverbindung.

Bewährt hat es sich zudem auch, wenn das Kühlmittel einer Gruppe entstammt, die Luft, Wasser und Öl umfasst. Hierdurch sind einfache und zugleich kostengünstige Kühlmittel gegeben, die üblicherweise bereits vorhanden sind, so dass keine infrastrukturelle Nachrüstung vorgenommen werden muss.

Als vorteilhaft hat es sich weiterhin auch erwiesen, wenn der Grundkörper aus Metall gebildet ist. Neben der damit verbundenen Stabilität der Spannbacke ist hiermit auch gewährleistet, dass die Wärmeleitung zwischen dem zu bearbeitenden Werkstück und dem das Kühlmittel führenden Kühlmittelkanal gewährleistet ist, wodurch sichergestellt ist, dass die auftretende Wärme effektiv abgeführt wird. Beispielsweise können Werkzeugstahl oder andere geeignete Metalle verwendet werden.

Aus fertigungstechnischer Sicht hat es sich in diesem Zusammenhang auch als besonders günstig gezeigt, wenn der Grundkörper aus einer Legierung gebildet ist, die Aluminium, Zink, Magnesium und Kupfer enthält. Derartige Legierungen sind hochfest und können zudem auch zur generativen Fertigung eingesetzt werden. Im Rahmen der Erfindung ist es hierbei jedochj auch vorgesehen, dass weitere Aluminium- oder Titanlegierungen sowie sonstige geeignete Legierungen verwendet werden.

Die dem Verfahren zur Herstellung einer Spannbacke zugrunde liegende Aufgabe besteht darin, den Herstellungsaufwand zu reduzieren und ein Verfahren bereitzustellen, mit dem eine Spannbacke hergestellt werden kann, die bei hoher mechanischer Stabilität kühlbar ist.

Diese Aufgabe wird gemäß der Erfindung dadurch gelöst, dass das Verfahren die Schritte umfasst:
- schichtweises Auftragen eines Werkstoffes zur Bildung eines Grundkörpers unter Aussparung eines Kühlmittelkanals, und
- simultanes Ausbilden einer Spannkontur.

Durch das erfindungsgemäße Verfahren lassen sich vielfältig gestaltete Kühlmittelkanäle realisieren, die insbesondere auch an den Verlauf der Spannkontur angepasst sein können. Durch das schichtweise Auftragen des Werkstoffes, bei dem der im Grundkörper befindliche Kühlmittelkanal ausgespart wird, lassen sich auf einfache Art und Weise die Hilfsbohrungen vermeiden, die sonst üblicherweise dazu verwendet werden, Kühlkreisläufe in massiven Körpern auszubilden. Da bei der Fertigung des Grundkörpers die Kühlkanäle und die Spannkontur zeitgleich mit ausgebildet werden, entfällt die Nachbearbeitung bis auf eventuell notwendige Schleifoperationen, was sich positiv auf die Fertigungskosten und die Fertigungsdauer auswirkt. Im Rahmen der Erfindung können dabei verschiedene generative Fertigungsverfahren verwendet werden, insbesondere Laserschmelzen oder Lasersintern aber auch Gießverfahren.

Bewährt hat es sich dabei auch, wenn das Verfahren weiterhin den Schritt umfasst:
- simultanes Einarbeiten eines Kühlmitteleinlasses und eines Kühlmittelauslasses in den Grundkörper.

Durch die simultane Einarbeiten des Kühlmitteleinlasses und des Kühlmittelauslasses in einem einzigen Fertigungsschritt ist es möglich, die durch das erfindungsgemäße Verfahren hergestellte Spannbacke unmittelbar und ohne größere Nachbearbeitungen bestimmungsgemäß zu verwenden. Im Folgenden wird die Erfindung an einem in der Zeichnung dargestellten Ausführungsbeispiel näher erläutert; es zeigen:
- Fig. 1: eine perspektivische Ansicht einer erfindungsgemäßen Spannbacke,
- Fig. 2: eine Draufsicht auf die erfindungsgemäße Spannbacke,
- Fig. 3: eine Schnittansicht entlang des Schnittes III-III aus Fig. 2,
- Fig. 4: eine Rückansicht der erfindungsgemäßen Spannbacke und
- Fig. 5: eine Schnittansicht entlang des Schnittes V-V aus Fig. 4.

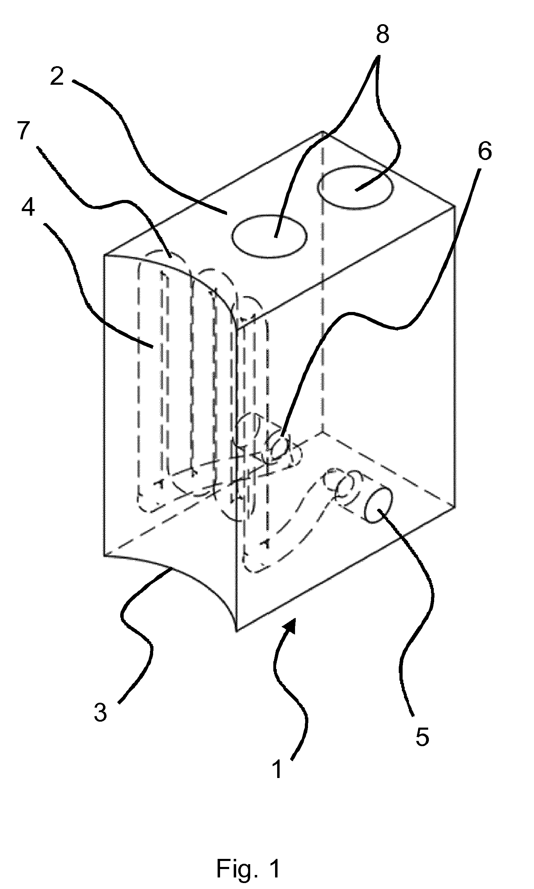

Figur 1 zeigt eine Spannbacke 1, die zum Spannen oder Halten eines Werkstückes vorgesehen ist. Die Spannbacke 1 ist im Wesentlichen aus einem Grundkörper 2 gebildet und weist auf einer Seite eine Spannkontur 3 auf, die in dem gezeigten Ausführungsbeispiel kreissegmentförmig gebildet ist. Wie in Figur 1 gestrichelt dargestellt, ist in dem Grundkörper 2 der Spannbacke 1 ein Kühlmittelkanal 4 ausgebildet, der durch einen Kühlmitteleinlass 5 und einen Kühlmittelauslass 6 begrenzt ist. Der mehrere Bogenabschnitte 7 aufweisende Kühlmittelkanal 4 folgt in dem gezeigten Ausführungsbeispiel mäanderförmig dem Verlauf der Spannkontur 3. In der Oberseite des Grundkörpers 2 sind zudem Aufnahmen 8 zur Aufnahme von Befestigungsmitteln ersichtlich, mit denen die Spannbacke 1 an einem geeigneten Spannmittel befestigt werden kann.

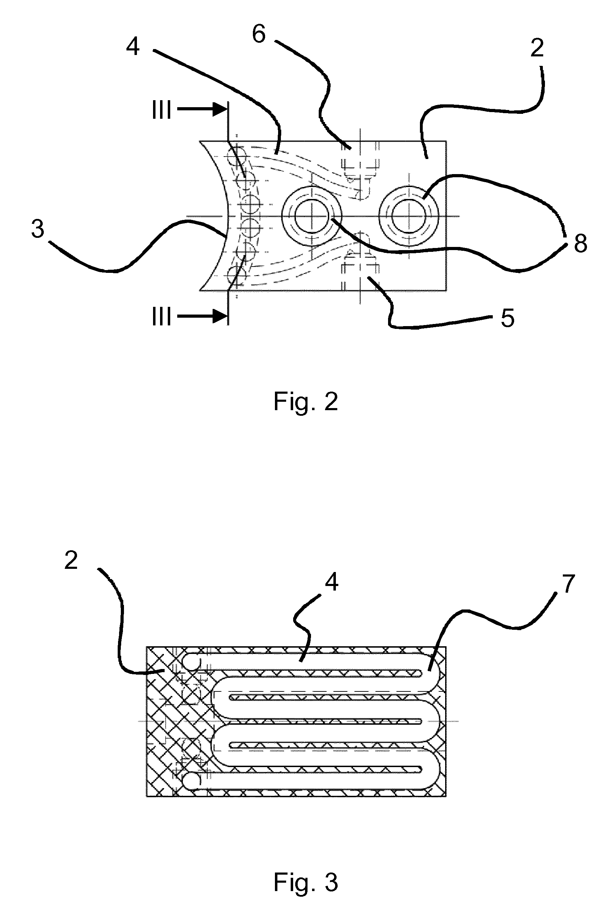

Wie der in Figur 2 dargestellten Draufsicht auf die erfindungsgemäße Spannbacke 1 zu entnehmen ist, folgt die Form des Kühlmittelkanals 4 der Gestaltung der Spannkontur 3. Der Abstand zwischen dem Kühlmittelkanal 4 und der Spannkontur 3 ist dabei geringer als der Durchmesser des Kühlmittelkanals, um die eine möglichst effektive Kühlung zu realisieren.

Der in der Figur 3 dargestellten Schnittansicht entlang des Schnittes III-III aus Figur 2 lässt sich insbesondere die mäanderförmige Gestaltung des Kühlmittelkanals 4 entnehmen, die aus einzelnen Bogenabschnitten 7 zusammengesetzt ist.

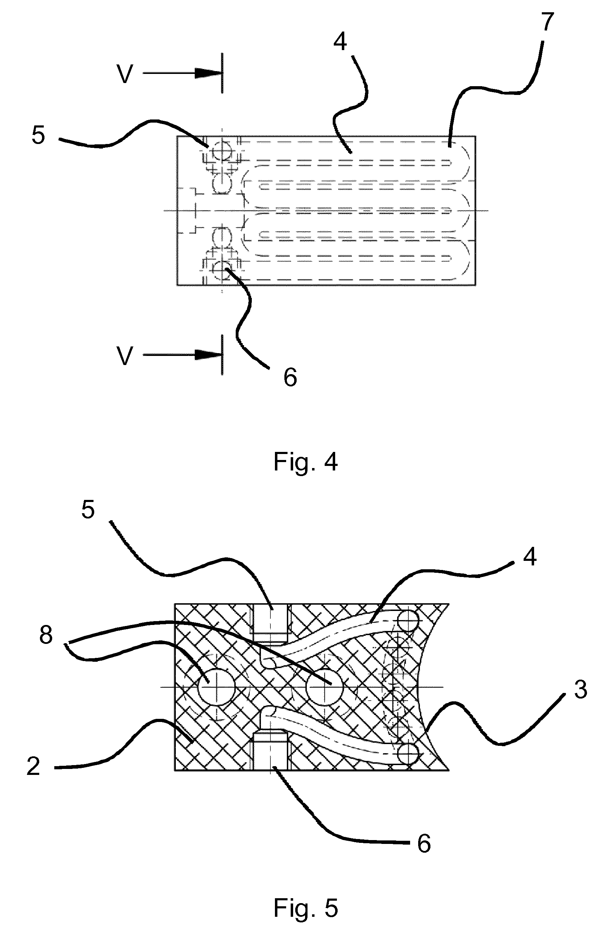

Fig. 4 zeigt in einer Rückansicht die erfindungsgemäße Spannbacke 1. Aus der Schnittansicht entlang des Schnittes V-V aus der Fig. 4, die in Fig. 5 dargestellt ist, wird die Positionierung des Kühlmitteleinlasses 5 und des Kühlmittelauslasses 6 ersichtlich, über die das Kühlmittel in den Kühlmittelkanal 4 ein- bzw. ausgeleitet werden kann. Der Grundkörper 2 ist in dem gezeigten Ausführungsbeispiel aus Metall gebildet, nämlich aus einer Legierung, die Aluminium, Zink, Magnesium und Kupfer enthält. Alternativ kann der Grundkörper 2 jedoch auch aus einer anderen Aluminium- oder Titanlegierung oder aus Werkzeugstahl gefertigt sein.

Im Folgenden wird das erfindungsgemäße Verfahren zur Herstellung der Spannbacke 1 noch einmal beschrieben. Die Fertigung des Grundkörpers 2 der Spannbacke 1 erfolgt, indem in einem generativen Fertigungsverfahren schichtweise Material ein geeignetes Substrat aufgetragen wird. An den Stellen, an denen später der Kühlmittelkanal 4 ausgebildet sein soll, wird kein Material aufgebracht, so dass der Grundkörper 2 schichtweise nebst dem Kühlmittelkanal 4 geformt wird. An den Stellen, an denen der Kühlmitteleinlass 5 und der Kühlmittelauslass 6 vorgesehen sind, werden bei dem erfindungsgemäßen Herstellungsverfahren entsprechende Anschlüsse unmittelbar während des Herstellungsprozesses ausgespart, so dass eine Nachbearbeitung des generativ gefertigten Grundkörpers 2 unterbleiben kann. Bei der Herstellung der Spannbacke 1 wird die Spannkontur 3 unmittelbar mit ausgebildet. Die Fertigung der einzelnen Schichten erfolgt dabei mittels Lasersintern.

### Bezugszeichenliste

- 1: Spannbacke
- 2: Grundkörper
- 3: Spannkontur
- 4: Kühlmittelkanal
- 5: Kühlmitteleinlass
- 6: Kühlmittelauslass
- 7: Bogenabschnitt
- 8: Aufnahme

## Patentansprüche

1. Spannbacke zum Spannen oder Halten eines Werkstückes, mit einem Grundkörper (2) und mit einer Spannkontur (3), die zur Anlage an ein Werkstück vorgesehen ist und durch eine Kühlvorrichtung kühlbar ist, **dadurch gekennzeichnet, dass** die Kühlvorrichtung durch mindestens einen zur Aufnahme eines Kühlmittels vorgesehenen Kühlmittelkanal (4) realisiert ist, der durch ein generatives Herstellungsverfahren im Grundkörper (2) derart ausgebildet ist, dass der Grundköper (2) frei von Hilfsbohrungen ist.

2. Spannbacke nach Anspruch 1, **dadurch gekennzeichnet, dass** der Kühlmittelkanal (4) mindestens einen Bogenabschnitt (7) aufweist.

3. Spannbacke nach Anspruch 1 oder 2, **dadurch gekennzeichnet, dass** der Kühlmittelkanal (4) einen mäanderförmigen Teilabschnitt beinhaltet.

4. Spannbacke nach einem der Ansprüche 1 bis 3, **dadurch gekennzeichnet, dass** der Verlauf des Kühlmittelkanals (4) an die Spannkontur (3) angepasst ist.

5. Spannbacke nach einem der Ansprüche 1 bis 4, **dadurch gekennzeichnet, dass** die Wandstärke zwischen der Spannkontur (3) und dem Kühlmittelkanal (4) kleiner ist als der Durchmesser des Kühlmittelkanals (4).

6. Spannbacke nach einem der Ansprüche 1 bis 5, **dadurch gekennzeichnet, dass** in dem Grundkörper (2) ein Kühlmitteleinlass (5) und ein Kühlmittelauslass (6) ausgebildet sind.

7. Spannbacke nach einem der Ansprüche 1 bis 6, **dadurch gekennzeichnet, dass** das Kühlmittel einer Gruppe entstammt, die Luft, Wasser und Öl umfasst.

8. Spannbacke nach einem der Ansprüche 1 bis 7, **dadurch gekennzeichnet, dass** der Grundkörper (2) aus Metall gebildet ist.

9. Spannbacke nach Anspruch 8, **dadurch gekennzeichnet, dass** der Grundkörper (2) aus einer Legierung gebildet ist, die Aluminium, Zink, Magnesium und Kupfer enthält

10. Verfahren zur Herstellung einer Spannbacke nach einem der Ansprüche 1 bis 9, umfassend die Schritte:
- schichtweises Auftragen eines Werkstoffes zur Bildung eines Grundkörpers (2) unter Aussparung eines Kühlmittelkanals (4), und
- simultanes Ausbilden einer Spannkontur (3).

11. Verfahren nach Anspruch 10, umfassend weiterhin den Schritt:
- simultanes Einarbeiten eines Kühlmitteleinlasses (5) und eines Kühlmittelauslasses (6).
